# EUROPÄISCHE PATENTSCHRIFT

(11) **EP 3 749 545 B1**
(45) Veröffentlichungstag und Bekanntmachung des Hinweises auf die Patenterteilung: **27.07.2022**
(21) Anmeldenummer: 19714110.4
(22) Anmeldetag: 11.03.2019
(51) Int. Cl.: B60N 2/24, B60N 2/015, B60N 2/60, B61D 33/00

(54) **FAHRZEUG UND VERFAHREN ZUR MONTAGE EINER BAUGRUPPE IN EINEM INNENRAUM EINES FAHRZEUGS**
VEHICLE AND METHOD FOR MOUNTING AN ASSEMBLY IN THE INTERIOR OF A VEHICLE
VÉHICULE ET PROCÉDÉ POUR MONTAGE D'UN ASSEMBLAGE DANS L'INTÉRIEUR D'UN VÉHICULE

(30) Priorität: 09.04.2018 DE 102018205275
(43) Veröffentlichungstag der Anmeldung: 16.12.2020
(73) Patentinhaber: Siemens Mobility GmbH, 81739 München (DE)
(72) Erfinder: MOCK, Stefan, 41366 Schwalmtal (DE)
(86) Internationale Anmeldenummer: PCT/EP2019/055957
(87) Internationale Veröffentlichungsnummer: WO 2019/197093

(56) Entgegenhaltungen:
- EP-A1- 3 202 613
- WO-A2-2011/094192
- US-A1- 2014 265 285

## Beschreibung

Fahrzeug und Verfahren zur Montage einer Baugruppe in einem Innenraum eines Fahrzeugs

Die Erfindung betrifft ein Fahrzeug mit einem Innenraum und einer im Innenraum angeordneten Baugruppe, wobei die Baugruppe einen an einer ersten Stelle im Innenraum befestigten Grundträger, eine an einer zweiten Stelle im Innenraum befestigte Sitzunterbauverkleidung und einen an dem Grundträger befestigten Sitzträger umfasst, wobei die Sitzunterbauverkleidung unabhängig von der Befestigung des Grundträgers befestigt ist und der Grundträger ausschließlich an einem die erste Stelle bildenden, tragenden Grundgerüst des Fahrzeugs befestigt ist, sowie ein Verfahren zur Montage einer solchen Baugruppe.

Ein solches Fahrzeug ist beispielsweise aus der US 2014/265285 A1 bekannt.

Die WO 2011/094192 A2 und die EP 3 202 613 A1 offenbaren weitere Fahrzeuge mit Sitzunterbauverkleidungen.

In einem Schienenfahrzeug oder auch in einem Bus ist eine Vielzahl technischer Geräte unterzubringen. Beispielsweise können die technischen Geräte in einem Schrank oder in mehreren Schränken untergebracht werden, welche separat zu mehreren Sitzen für Fahrgäste in dem Fahrzeug vorgesehen sind.

Um die Fahrgastkapazität zu erhöhen, ist es bekannt, dass die technischen Geräte in Boxen untergebracht werden können, wobei die Boxen wiederum als Sitzunterbau genutzt werden. Dabei werden auf den Boxen, d. h. auf den Sitzunterbauten, die Sitze für die Fahrgäste montiert. Hierbei wird jedoch der Fahrgastkomfort negativ beeinträchtigt, da Schwingungen und Vibrationen der technischen Geräte auf die Wände der jeweiligen Box (d. h. auf die jeweilige Sitzunterbauverkleidung) übertragen werden. Bei der Fahrt des Fahrzeugs vibrieren die Wände der jeweiligen Box, d. h. die Sitzunterbauverkleidung, und erzeugen störende Geräusche.

Eine Aufgabe der Erfindung ist es, ein Fahrzeug mit einem Innenraum und einer im Innenraum angeordneten Baugruppe anzugeben, bei welcher die Sitzunterbauverkleidung weniger vibriert.

Die Aufgabe wird bei dem eingangs beschiebenen Fahrzeug dadurch gelöst, dass die Sitzunterbauverkleidung ausschließlich an einem die zweite Stelle bildenden Fußboden des Fahrzeugs befestigt ist, wobei der Fußboden von dem Grundgerüst des Fahrzeugs entkoppelt ist und weder zwischen dem Grundträger und der Sitzunterbauverkleidung noch zwischen dem Sitzträger und der Sitzunterbauverkleidung eine unmittelbare kraftschlüssige Verbindung besteht, wobei zwischen dem tragenden Grundgerüst des Fahrzeugs, an welchem der Grundträger befestigt ist, und dem Fußboden des Fahrzeugs, an welchem die Sitzunterbauverkleidung befestigt ist, keine unmittelbare kraftschlüssige Verbindung besteht, und der Fußboden des Fahrzeugs unter Verwendung von Entkopplungselementen von dem tragenden Grundgerüst des Fahrzeugs mechanisch entkoppelt ist.

Insbesondere ist es zweckmäßig, wenn die Sitzunterbauverkleidung den Sitzträger nicht berührt. Weiter ist es zweckmäßig, wenn die Sitzunterbauverkleidung den Grundträger nicht berührt. Vorzugsweise ist die Sitzunterbauverkleidung beabstandet von dem Grundträger und dem Sitzträger angeordnet. Weil zwischen dem Sitzträger und der Sitzunterbauverkleidung keine unmittelbare kraftschlüssige Verbindung besteht, wird zweckmäßigerweise eine Schwingungsübertragung auf die Sitzunterbauverkleidung reduziert, insbesondere vermieden. Auf diese Weise werden Vibrationen der Sitzunterbauverkleidung reduziert.

Der Fußboden des Fahrzeugs ist unter Verwendung von Entkopplungselementen von dem tragenden Grundgerüst mechanisch entkoppelt. Zum Beispiel kann das Entkopplungselement einen Schaumstoff, insbesondere einen Polyurethan-Schaum, umfassen.

Der Grundträger kann mehrere Streben umfassen. Die Streben sind vorzugsweise zu einem Rahmen zusammengefügt. Insbesondere kann der Rahmen rechteckig sein. D. h., dass der Grundträger beispielsweise die Form eines rechteckigen Rahmens aufweisen kann.

Es ist sinnvoll, wenn der Grundträger kraftschlüssig mit der ersten Stelle im Innenraum verbunden ist.

Der Grundträger ist an einem tragenden Grundgerüst des Fahrzeugs befestigt. D. h., dass die erste Stelle das Grundgerüst des Fahrzeugs ist. Insbesondere kann der Grundträger kraftschlüssig mit dem Grundgerüst des Fahrzeugs verbunden sein. Es ist vorgesehen, dass der Grundträger ausschließlich an der ersten Stelle befestigt ist. D. h., der Grundträger ist ausschließlich an dem tragenden Grundgerüst, kurz Grundgerüst, des Fahrzeugs befestigt.

Das Grundgerüst des Fahrzeugs kann mehrere Seitenelemente aufweisen, welche vorzugsweise eine Seitenwand bilden. Es ist bevorzugt, wenn der Grundträger, insbesondere ausschließlich, an einem oder mehreren der Seitenelemente befestigt ist. D. h., dass die erste Stelle eine oder mehrere Seitenelemente des Grundgerüsts umfassen kann. Vorteilhafterweise ist der Grundträger ausschließlich an dem einen oder mehreren Seitenelement(en) befestigt. Insbesondere kann der Grundträger in einer sogenannten Cantilever-Bauweise ausgeführt sein. Das/Die Seitenelement(e) des Grundgerüsts kann/können beispielsweise als Profilschienen ausgeführt sein. Das Seitenelement, insbesondere die Profilschiene, kann beispielsweise eine C-Schiene aufweisen.

Der Grundträger kann unter Verwendung von Befestigungsmitteln an dem Grundgerüst, insbesondere an dem einen oder den mehreren Seitenelement(en), befestigt sein. Die Befestigungsmittel können zum ausschließlichen Befestigen des Grundträgers an dem Grundgerüst des Fahrzeugs, insbesondere zum ausschließlichen Befestigen des Grundträgers an einem oder mehreren Seitenelementen des Grundgerüsts eingerichtet sein.

Beispielsweise kann der Grundträger unter Verwendung einer Schraubverbindung an dem zumindest einem Seitenelement befestigt sein. Falls das zumindest eine Seitenelement als Profilschiene, insbesondere mit zumindest einer C-Schiene, ausgebildet ist, kann der Grundträger unter Verwendung von Nutensteinen, welche in die Profilschiene, insbesondere in die C-Schiene, eingesetzt sind, - beispielsweise über eine Schraubverbindung - an der Profilschiene befestigt sein.

Weiter kann der Grundträger unter Verwendung zumindest einer Stütze an zumindest einem der Seitenelemente abgestützt sein. Es ist vorteilhaft, wenn der Grundträger, insbesondere beidseitig, unter Verwendung von zwei Stützen an zumindest einem der Seitenelemente abgestützt ist. Zur beidseitigen Abstützung können zwei gegenüberliegende Seiten des Grundträgers jeweils über eine Stütze an zumindest einem der Seitenelemente abgestützt sein.

Wie zuvor erwähnt, kann der Grundträger mehrere Streben umfassen, welche vorzugsweise zu einem Rahmen zusammengefügt sind. Zumindest zwei der Streben verlaufen vorzugsweise in Längsrichtung des Rahmens.

Beispielsweise können die zuvor genannten Stützen mit den in Längsrichtung des Rahmens verlaufenden Streben verbunden sein.

Es ist vorteilhaft, wenn der Sitzträger ein Sitzträger zur Befestigung und/oder Abstützung zumindest eines Sitzes ist. Insbesondere kann auf dem Sitzträger ein Sitz angebracht werden und/oder sein.

Der Sitzträger kann beispielsweise plattenförmig ausgebildet sein.

Vorzugsweise ist der Sitzträger kraftschlüssig mit dem Grundträger verbunden. Weiter ist es vorteilhaft, wenn der Sitzträger über dem Grundträger angeordnet ist.

Die Sitzunterbauverkleidung ist von dem Grundträger sowie von dem Sitzträger mechanisch entkoppelt.

Die Sitzunterbauverkleidung ist ausschließlich an der zweiten Stelle befestigt. Wie zuvor genannt, ist die zweite Stelle eine von der ersten Stelle entkoppelte Stelle. D. h., die Sitzunterbauverkleidung ist ausschließlich an einer von dem Grundgerüst des Fahrzeugs entkoppelten Stelle befestigt.

Auf diese Weise ist die Sitzunterbauverkleidung derart befestigt, dass keine unmittelbare kraftschlüssige Verbindung zwischen der Sitzunterbauverkleidung und dem Grundgerüst besteht.

Die Sitzunterbauverkleidung ist ausschließlich an einem Fußboden des Fahrzeugs befestigt, wobei der Fußboden von dem Grundgerüst des Fahrzeugs entkoppelt ist, unter Verwendung von Entkopplungselementen. Weiter kann der Fußboden begehbar sein.

Die Sitzunterbauverkleidung kann unter Verwendung zumindest eines Befestigungselements an dem Fußboden befestigt sein. Beispielsweise kann die Sitzunterbauverkleidung unter Verwendung zumindest eines Winkelelements an dem Fußboden befestigt sein.

Es ist bevorzugt, wenn die Sitzunterbauverkleidung den Grundträger zumindest seitlich umschließt.

Es ist vorteilhaft, wenn zumindest eine Oberseite des Grundträgers zumindest im Wesentlichen horizontal verläuft. Weiter ist es vorteilhaft, wenn zumindest die Oberseite des Grundträgers zumindest im Wesentlichen parallel zu dem Fußboden verläuft.

Außerdem ist es vorteilhaft, wenn zumindest eine Oberseite des Sitzträgers zumindest im Wesentlichen horizontal verläuft. Weiter ist es vorteilhaft, wenn zumindest die Oberseite des Sitzträgers zumindest im Wesentlichen parallel zu dem Fußboden und/oder parallel zu der Oberseite des Grundträgers verläuft.

Die Sitzunterbauverkleidung kann eine Oberkante aufweisen.

Die Oberkante der Sitzunterbauverkleidung ist vorzugsweise unterhalb des Sitzträgers angeordnet. Weiter ist es bevorzugt, wenn die Oberkante der Sitzunterbauverkleidung oberhalb des Grundträgers angeordnet ist. Die Oberkante kann seitlich versetzt zu dem Grundträger und/oder zu dem Sitzträger angeordnet sein. D. h., die Oberkante der Sitzunterbauverkleidung kann auf einer Höhe angeordnet sein, welche oberhalb des Grundträgers und unterhalb des Sitzträgers liegt.

Zwischen der Oberkante der Sitzunterbauverkleidung und dem Sitzträger ist zweckmäßigerweise ein Spalt angeordnet. Der Spalt kann eine Spaltbreite von maximal 6 mm aufweisen. In dem Spalt kann eine Brandschutzdichtung eingesetzt sein. Die Brandschutzdichtung bewirkt sinnvollerweise keine kraftschlüssige Verbindung zwischen Sitzunterbauverkleidung und dem Sitzträger.

In einer bevorzugten Ausgestaltung der Erfindung ist der Sitzträger unter Verwendung von Abstandselementen an dem Grundträger befestigt. Zweckmäßigerweise ist der Sitzträger unter Verwendung der Abstandselemente an dem Grundträger derart befestigt, dass zwischen dem Grundträger und dem Sitzträger ein Abstand besteht.

Zweckmäßigerweise ist die Sitzunterbauverkleidung beabstandet von den Abstandselementen angeordnet.

In einer bevorzugten Ausgestaltung der Erfindung weist die Sitzunterbauverkleidung ein Deckelement auf. Vorzugsweise bedeckt das Deckelement den Grundträger zumindest teilweise. Es ist zweckmäßig, wenn zumindest ein Teil des Deckelements der Sitzunterbauverkleidung innerhalb des Abstands zwischen dem Grundträger und dem Sitzträger angeordnet ist.

Zweckmäßigerweise berührt das Deckelement weder den Grundträger noch den Sitzträger noch einen der Abstandshalter. D. h., es ist zweckmäßig, wenn das Deckelement zu dem Grundträger sowie zu dem Sitzträger beabstandet angeordnet ist.

Es ist vorteilhaft, wenn eine Oberseite des Deckelements zumindest im Wesentlichen parallel zu einer Unterseite des Sitzträgers verläuft.

Falls der Sitzträger plattenförmig ausgebildet ist, kann die Oberseite des Deckelements zumindest im Wesentlichen horizontal verlaufen und/oder zumindest im Wesentlichen parallel zu einem Fußboden des Innenraums verlaufen.

Das Deckelement kann beispielsweise plattenförmig ausgebildet sein.

Es ist vorteilhaft, wenn das Deckelement der Sitzunterbauverkleidung Aussparungen aufweist, durch welche die Abstandselemente hindurchgeführt sind.

Zweckmäßigerweise ist dem Deckelement und dem Sitzträger ein Spalt angeordnet. Insbesondere kann der Spalt zwischen der Oberseite des Deckelements und dem Sitzträger angeordnet sein. Der Spalt kann eine Spaltbreite von maximal 6 mm aufweisen. In dem Spalt ist vorzugsweise eine Brandschutzdichtung eingesetzt. Die Brandschutzdichtung bewirkt sinnvollerweise keine kraftschlüssige Verbindung zwischen der Sitzunterbauverkleidung und dem Sitzträger.

Es ist vorteilhaft, wenn das Fahrzeug als Bodenfahrzeug ausgeführt ist. Das Fahrzeug kann beispielsweise als Bus ausgeführt sein. In einer bevorzugten Ausgestaltung der Erfindung ist das Fahrzeug als Schienenfahrzeug ausgeführt.

Die Sitzunterbauverkleidung kann zumindest ein technisches Gerät des Fahrzeugs verkleiden und/oder umschließen.

Die Sitzunterbauverkleidung kann eine Klappe für einen Zugang zu dem zumindest einen technischen Gerät, beispielsweise für dessen Wartung, aufweisen.

Ferner kann die Sitzunterbauverkleidung Anschlusselemente, z. B. Steckdosen oder ähnliches, aufweisen. Weiter kann die Sitzunterbauverkleidung einen Luftauslass zur Belüftung und/oder zur Klimatisierung des Innenraums aufweisen.

Ferner ist die Erfindung gerichtet auf ein Verfahren zur Montage einer Baugruppe in einem Innenraum eines Fahrzeugs. Hinsichtlich des Verfahrens wird die oben formulierte Aufgabe gelöst durch ein Verfahren nach Anspruch 10.

Das Fahrzeug kann das zuvor genannte Fahrzeug sein. Die im Zusammenhang mit dem Verfahren beschriebene Baugruppe kann folglich die Baugruppe des zuvor genannten Fahrzeugs sein. Zweckmäßigerweise ist der Grundträger in der Höhe verstellbar.

Vorzugsweise wird die Höhe des Grundträgers eingestellt, insbesondere bevor der Sitzträger an dem Grundträger befestigt wird. Die Höhe des Grundträgers kann unter Verwendung von Abstandshaltern eingestellt werden.

Die Sitzunterbauverkleidung kann ein Deckelement aufweisen, welches den Grundträger zumindest teilweise bedeckt. Die Höhe des Grundträgers kann bezüglich der Höhe des Deckelements eingestellt werden. Weiter kann die Höhe des Grundträgers bezüglich einer Höhe einer Oberkante der Sitzunterbauverkleidung eingestellt werden.

Es ist vorteilhaft, wenn die Höhe des Grundträgers derart eingestellt wird, dass der Grundträger mit einer vorgegebenen Höhendifferenz unterhalb des Deckelements der Sitzunterbauverkleidung angeordnet ist.

Zweckmäßigerweise werden die Abstandshalter nach dem Einstellen der Höhe des Grundträgers entfernt.

Nach dem Entfernen der Abstandshalter kann der Sitzträger unter Verwendung von den zuvor beschriebenen Abstandselementen an dem Grundträger befestigt werden. Dabei wird vorzugweise der Sitzträger mit einer vorgegebenen Höhendifferenz oberhalb des Deckelements der Sitzunterbauverkleidung platziert.

Auf diese Weise kann zumindest ein Teil des Deckelements der Sitzunterbauverkleidung innerhalb des Abstands zwischen dem Grundträger und dem Sitzträger angeordnet werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung.

Es zeigen:
- FIG 1: eine Baugruppe in einem Innenraum eines Fahrzeugs in einer dreidimensionalen Ansicht,
- FIG 2: einen Querschnitt durch die Baugruppe aus FIG 1,
- FIG 3: einen Ausschnitt aus FIG 2, und
- FIG 4: einen Längsschnitt durch die Baugruppe aus FIG 1.
- FIG 5: einen ersten Schritt zur Montage der Baugruppe aus FIG 1,
- FIG 6: einen zweiten Schritt zur Montage der Baugruppe aus FIG 1,
- FIG 7: einen dritten Schritt zur Montage der Baugruppe aus FIG 1,

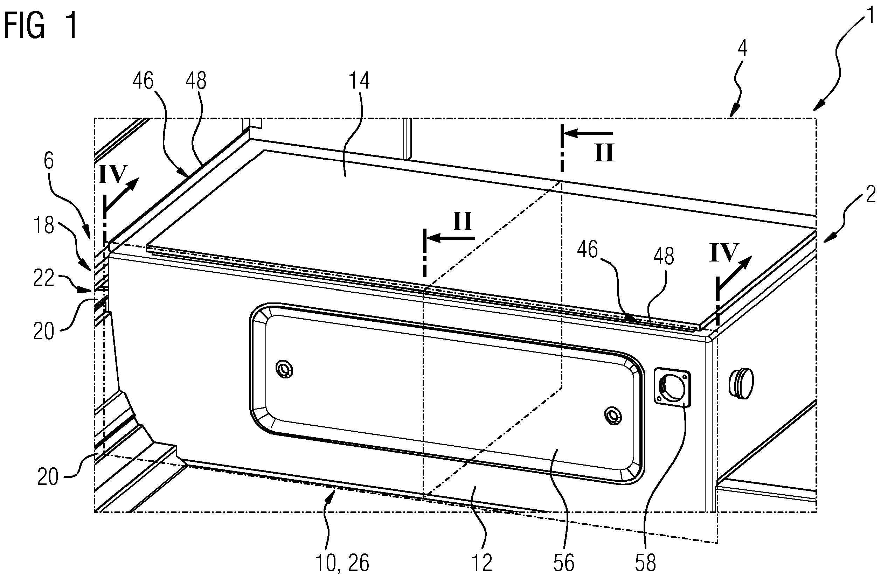

FIG 1 zeigt einen Innenraum 4 eines Fahrzeugs 1 und eine im Innenraum 4 des Fahrzeugs 1 angeordnete Baugruppe 2 in einer dreidimensionalen Ansicht. Das Fahrzeug 1 mit seinem Innenraum 4 ist nicht vollständig dargestellt. In FIG 1 sind außerdem eine in Querrichtung der Baugruppe 2 verlaufende Schnittebene II-II und eine in Längsrichtung der Baugruppe 2 verlaufende Schnittebene IV-IV dargestellt.

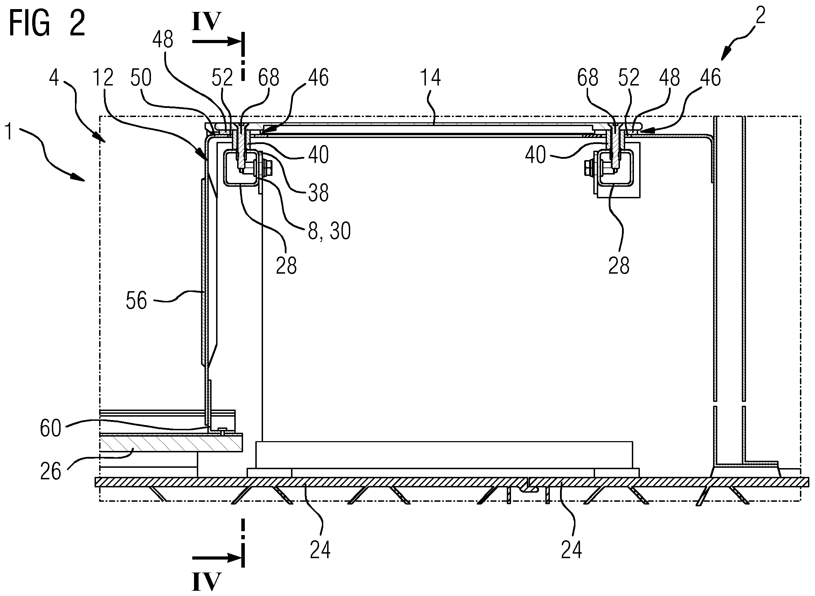

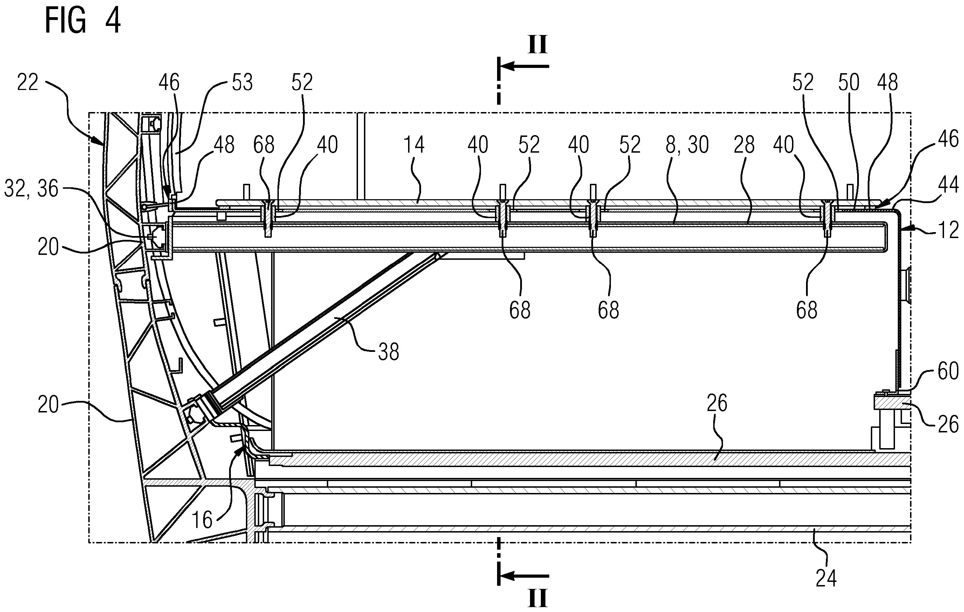

Weiter zeigt FIG 2 einen Querschnitt durch die in dem Innenraum 4 des Fahrzeugs 1 angeordnete Baugruppe 2 aus FIG 1 (und FIG 4) entlang der Schnittebene II-II. In FIG 2 ist auch die Schnittebene IV-IV dargestellt.

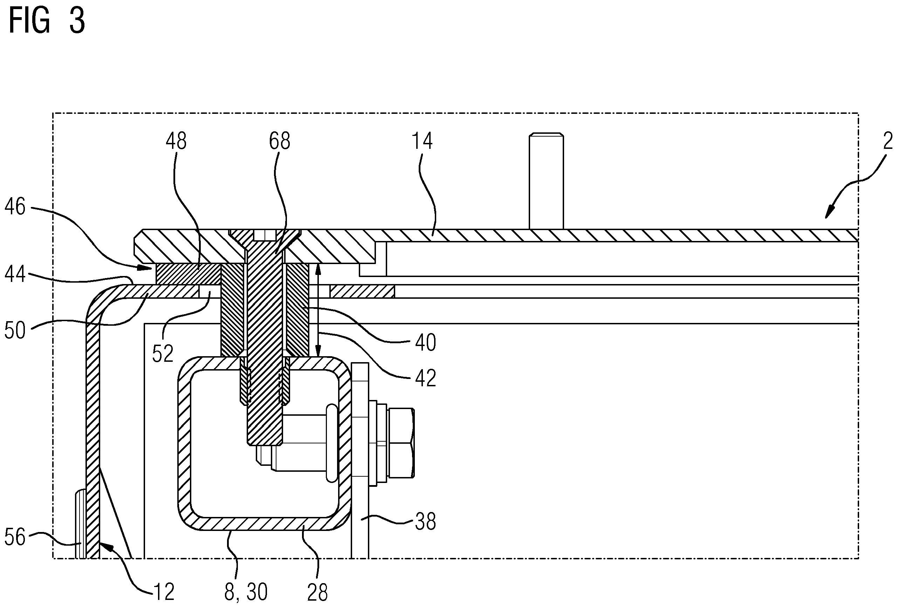

FIG 3 zeigt einen Ausschnitt aus FIG 2 zur besseren Sichtbarkeit.

Außerdem zeigt FIG 4 einen Längsschnitt durch die in dem Innenraum 4 des Fahrzeugs 1 angeordnete Baugruppe 2 aus FIG 1 und FIG 2 entlang der Schnittebene IV-IV. In FIG 4 ist auch die Schnittebene II-II dargestellt.

Die Baugruppe 2 umfasst einen an einer ersten Stelle 6 im Innenraum 4 befestigten Grundträger 8. Außerdem umfasst die Baugruppe 2 eine an einer zweiten Stelle 10 im Innenraum 4 unabhängig von der Befestigung des Grundträgers 8 befestigte Sitzunterbauverkleidung 12. Ferner umfasst die Baugruppe 2 einen an dem Grundträger 8 befestigten Sitzträger 14.

Zwischen dem Sitzträger 14 und der Sitzunterbauverkleidung 12 besteht keine unmittelbare kraftschlüssige Verbindung. Auch zwischen dem Grundträger 8 und der Sitzunterbauverkleidung 12 besteht keine unmittelbare kraftschlüssige Verbindung. Außerdem besteht zwischen der ersten Stelle 6, an welcher der Grundträger 8 befestigt ist, und der zweiten Stelle 10, an welcher die Sitzunterbauverkleidung 12 befestigt ist, keine unmittelbare kraftschlüssige Verbindung. Die zweite Stelle 10 ist unter Verwendung von Entkopplungselementen 16 (vgl. FIG 4) von der ersten Stelle 6 mechanisch entkoppelt.

Die erste Stelle 6 ist ein tragendes Grundgerüst 18 des Fahrzeugs 1. D. h., dass der Grundträger 8 ist ausschließlich an dem tragenden Grundgerüst 18 des Fahrzeugs 1 befestigt.

Das Grundgerüst 18 des Fahrzeugs 1 weist mehrere Seitenelemente 20 auf, welche eine Seitenwand 22 des Fahrzeugs 1 bilden (siehe FIG 4). Außerdem weist das Grundgerüst 18 mehrere Unterbodenelemente 24 auf, welche einen Unterboden des Fahrzeugs 1 bilden (siehe FIG 2, FIG 4).

Der Grundträger 8 der Baugruppe 2 ist in diesem Ausführungsbeispiel ausschließlich an einem oder mehreren der Seitenelemente 20 befestigt.

Die zweite Stelle 10 ist ein begehbarer Fußboden 26 des Fahrzeugs 1, welcher von dem Grundgerüst 18 des Fahrzeugs 1, unter Verwendung der Entkopplungselemente 16, entkoppelt ist.

Die Sitzunterbauverkleidung 12 ist ausschließlich an der zweiten Stelle 10 befestigt. D. h., dass die Sitzunterbauverkleidung 12 ausschließlich an dem begehbaren Fußboden 26, welcher von dem Grundgerüst 18 des Fahrzeugs 1 entkoppelt ist, befestigt ist.

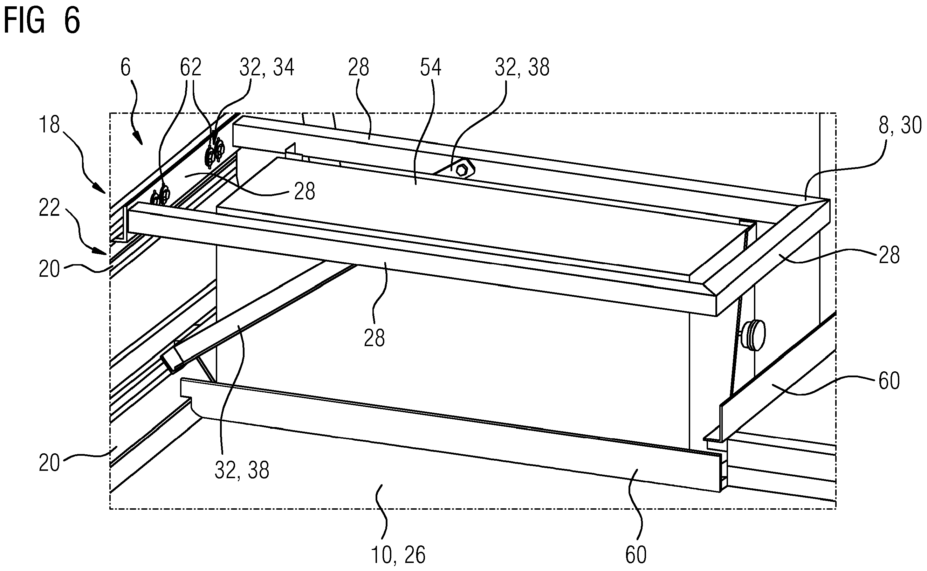

Der Grundträger 8 der Baugruppe 2 umfasst in diesem Ausführungsbeispiel mehrere Streben 28, welche zu einem rechteckigen Rahmen 30 zusammengefügt sind. D. h., dass der Grundträger 8 hier die Form eines rechteckigen Rahmens 30 aufweist (vgl. auch FIG 6). Diese Form ermöglicht ein geringes Gewicht des Grundträgers 8. Prinzipiell kann der Grundträger 8 aber auch anders ausgebildet sein.

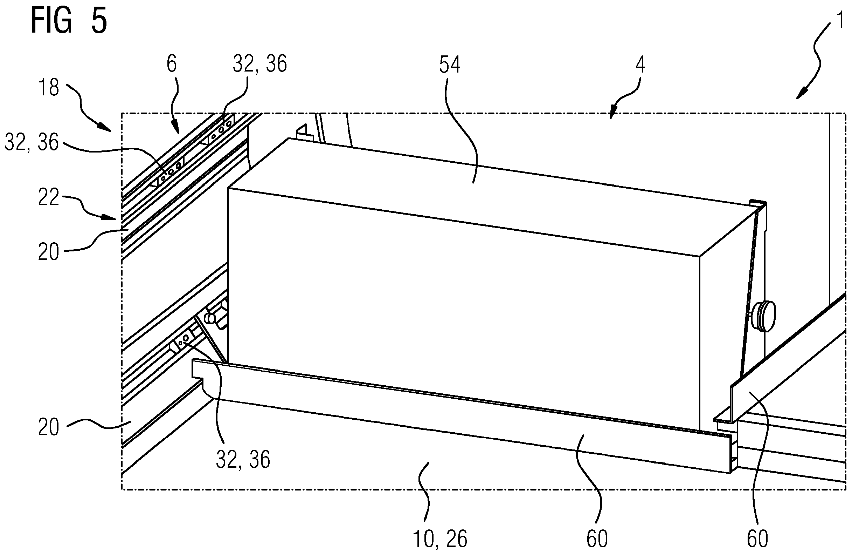

Der Grundträger 8 ist unter Verwendung von Befestigungsmitteln 32 an dem Grundgerüst 18 des Fahrzeugs 1, insbesondere an dem zumindest einem Seitenelement 20, befestigt (vgl. FIG 4). Die Befestigungsmittel 32 umfassen in diesem Ausführungsbeispiel Schraubverbindungen 34, Nutensteine 36 und zumindest eine Stütze 38 (vgl. FIG 5 und FIG 6).

Der Sitzträger 14 ist auf dem Grundträger 8 angebracht. In diesem Ausführungsbeispiel ist der Sitzträger 14 unter Verwendung von Abstandselementen 40 an dem Grundträger 8 befestigt, sodass zwischen dem Grundträger 8 und dem Sitzträger 14 ein Abstand 42 besteht. Der Abstand 42 ist der Übersichtlichkeit halber nur in FIG 3 explizit eingezeichnet.

Die Sitzunterbauverkleidung 12 ist beabstandet von den Abstandselementen 40 angeordnet. D. h., dass die Sitzunterbauverkleidung 12 die Abstandselemente 40 nicht berührt.

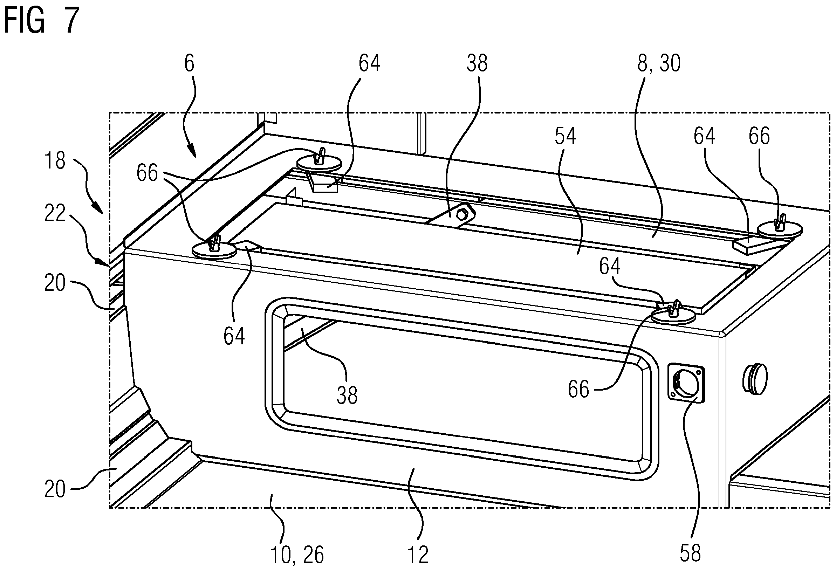

Die Sitzunterbauverkleidung 12 umschließt den Grundträger 8 der Baugruppe 2 zumindest seitlich (siehe FIG 1 und FIG 2, vgl. auch FIG 7).

Ferner weist die Sitzunterbauverkleidung 12 eine Oberkante 44 auf, welche auf einer Höhe angeordnet ist, die oberhalb des Grundträgers 8 und unterhalb des Sitzträgers 14 liegt (vgl. FIG 3) .

Zwischen der Oberkante 44 der Sitzunterbauverkleidung 12 und dem Sitzträger 14 ist ein Spalt 46 mit einer Spaltbreite von maximal 6 mm angeordnet. In dem Spalt 46 ist eine Brandschutzdichtung 48 eingesetzt. Die Brandschutzdichtung 48 bewirkt keine kraftschlüssige Verbindung zwischen Sitzunterbauverkleidung 12 und dem Sitzträger 14.

Die Sitzunterbauverkleidung 12 weist ein Deckelement 50 auf, welches den Grundträger 8 zumindest teilweise bedeckt. Das Deckelement 50 ist in diesem Ausführungsbeispiel plattenförmig ausgeführt. Zumindest ein Teil des Deckelements 50 der Sitzunterbauverkleidung 12 ist innerhalb des Abstands 42 zwischen dem Grundträger 8 und dem Sitzträger 14 angeordnet. Das Deckelement 50 berührt weder den Grundträger 8 noch den Sitzträger 14 noch einen der Abstandshalter 40.

Das Deckelement 50 weist Aussparungen 52 auf, durch welche sich die Abstandselemente 40, insbesondere beabstandet von dem Deckelement 50, erstrecken.

Zwischen einer Oberseite des Deckelements 50 und dem Sitzträger 12 ist ein Spalt 46 angeordnet, insbesondere der zuvor genannte Spalt 46. Der Spalt 46 weist eine Spaltbreite von maximal 6 mm auf und in dem Spalt 46 ist die Brandschutzdichtung 48 eingesetzt.

Die Sitzunterbauverkleidung 12 weist außerdem keine kraftschlüssige Verbindung zu den Seitenelementen 20 auf. Beispielsweise kann zwischen der Sitzunterbauverkleidung 12 und einer an den Seitenelementen 20 angebrachten Wandverkleidung 53 ein Spalt 46 angeordnet sein. In den letztgenannten Spalt 46 kann eine Brandschutzdichtung 48 eingesetzt sein. Die Brandschutzdichtung 48 bewirkt keine kraftschlüssige Verbindung.

Das Fahrzeug 1 kann beispielsweise ein Schienenfahrzeug sein. Die Sitzunterbauverkleidung 12 verkleidet in diesem Ausführungsbeispiel zumindest ein technisches Gerät 54 des Fahrzeugs 1. Das technische Gerät 54 ist auf den Unterbodenelementen 24 des Fahrzeugs 1 angebracht. Auf diese Weise ist das technische Gerät 54 kraftschlüssig mit den Unterbodenelementen 24 - und damit mit dem Grundgerüst 18 des Fahrzeugs 1 - verbunden.

Die Sitzunterbauverkleidung 12 berührt das technische Gerät 54 nicht. Insbesondere besteht zwischen der Sitzunterbauverkleidung 12 und dem technischen Gerät 54 keine kraftschlüssige Verbindung.

Die Sitzunterbauverkleidung 12 weist eine abnehmbare Klappe 56 für einen Zugang zu dem technischen Gerät 54, beispielsweise für dessen Wartung, auf. Ferner weist die Sitzunterbauverkleidung 12 ein Anschlusselement 58, welches hier als Steckdose ausgeführt ist, auf.

FIGen 5 bis 7 zeigen ein Verfahren zur Montage der Baugruppe 2 aus FIG 1 in dem Innenraum 4 des Fahrzeugs 1 aus FIG 1.

Zur Montage der Baugruppe 2 werden an der zweiten Stelle 10 im Innenraum 4, d. h. hier an dem Fußboden 26, Befestigungselemente 60 zur Befestigung der Sitzunterbauverkleidung 12 angeordnet (FIG 5). Die Befestigungselemente 60 werden ausschließlich an dem Fußboden 26 befestigt.

Die Befestigungselemente 60 sind beispielhaft als Winkelelemente ausgebildet. In diesem Beispiel werden die Befestigungselemente 60 an den Fußboden 26 angeschraubt. Prinzipiell könnten die Befestigungselemente 60 auch an den Fußboden 26 angeschweißt, angeklebt oder anderweitig befestigt werden. Ferner können die Befestigungselemente 60 auch eine andere Form aufweisen.

Weiter wird der Grundträger 8 an der ersten Stelle 6 im Innenraum 4, hier an den Grundgerüst 18, befestigt (FIG 6). Insbesondere wird der Grundträger 8 an zwei der Seitenelemente 20 des Grundgerüsts 18 befestigt. Dabei wird der Grundträger 8 ausschließlich an den beiden Seitenelementen 20 befestigt.

Der Grundträger 8 wird unter Verwendung von den Nutensteinen 36, welche in ein erstes der Seitenelemente 20 eingesetzt sind (vgl. FIG 5), an diesem ersten Seitenelement 20 befestigt. Insbesondere wird der Grundträger 8 mit den Nutensteinen 36, welche in das erste der Seitenelemente 20 eingesetzt sind, verschraubt - insbesondere unter Verwendung der Schraubverbindung 34. Eine der Streben 28 des als Rahmen 30 ausgebildeten Grundträgers 8 weist Bohrungen 62 auf, über welche diese Strebe 28 des Grundträgers 8 mit den Nutensteinen 36 in dem ersten Seitenelement 20 verschraubt wird.

Die Bohrungen 62 sind in diesem Ausführungsbeispiel als Langlöcher ausgeführt. Auf diese Weise ist der Grundträger 8 höhenverstellbar.

Weiter wird der Grundträger 8 unter Verwendung von zwei Stützen 38 an einem zweiten der Seitenelemente 20 abgestützt. Die Stützen 38 sind an einem jeweiligen Ende mit den in Längsrichtung des rechteckigen Rahmens 30 verlaufenden Streben 28 verbunden. Auf diese Weise wird jede der zwei gegenüberliegenden in Längsrichtung des rechteckigen Rahmens 30 verlaufenden Streben 28 jeweils über eine Stütze 38 an dem Grundgerüst 18, insbesondere an dem zweiten Seitenelement 20, abgestützt. Auf diese Weise wird eine beidseitige Abstützung des Grundträgers 8 erreicht.

Die Stützen 38 werden an dem anderen jeweiligen Ende mit dem zweiten Seitenelement 20 verbunden. Die Stützen 38 werden unter Verwendung von Nutensteinen 36, welche in das zweite Seitenelement 20 eingesetzt sind (vgl. FIG 5), an diesem zweiten Seitenelement 20 befestigt. Insbesondere wird die Stütze 38 unter Verwendung einer Schraubverbindung 34 mit dem Nutenstein 36, welcher in das zweite Seitenelement 20 eingesetzt ist, verschraubt.

Zur Höhenverstellung des Grundträgers 8 sind die Stützen 38 längenverstellbar. In diesem Beispiel sind die Stützen 38 unter Verwendung von Beilegscheiben längenverstellbar. Prinzipiell könnten die Stützen 38 auch anderweitig, z. B. teleskopartig, längenverstellbar sein.

Dann wird die Sitzunterbauverkleidung 12 unter Verwendung der Befestigungselemente 60 an der zweiten Stelle 10 im Innenraum 4, hier ausschließlich an dem Fußboden 26, unabhängig von der Befestigung des Grundträgers 8 befestigt (FIG 7). Dazu wird die Sitzunterbauverkleidung 12 an den Befestigungselementen 60, welche wiederum an dem Fußboden 26 befestigt sind, befestigt. Beispielsweise wird die Sitzunterbauverkleidung 12 mit den Befestigungselementen 60 verschraubt.

Die Höhe des Grundträgers 8 wird derart eingestellt, dass der Grundträger 8 mit einer vorgegebenen Höhendifferenz unterhalb des Deckelements 50 der Sitzunterbauverkleidung 12 angeordnet ist. Die Höhe des Grundträgers 8 wird unter Verwendung von Abstandshaltern 64 eingestellt. Dazu werden die Abstandshalter 64 zwischen dem Deckelement 50 der Sitzunterbauverkleidung 12 und den Grundträger 8 positioniert. Beispielsweise können die Abstandshalter 64 mittels einer Schraubverbindung 66 an dem Deckelement 50 fixiert werden. Die Abstandshalter 64 liegen von unten an dem Deckelement 50 an.

Der Grundträger 8 wird soweit in der Höhe nach oben verstellt, bis er von unten an den Abstandshaltern 64 anliegt. Auf diese Weise wird die Höhendifferenz des Grundträgers 8 zum Deckelement 50 durch die Abstandshalter 64 vorgegeben.

Die Schraubverbindungen 34, mittels welchen der Grundträger 8 an dem Grundgerüst 18 befestigt ist, werden auf dieser Höhe festgezogen.

Dann werden die Abstandshalter 64 wieder entfernt.

Der Sitzträger 14 wird dann unter Verwendung von den Abstandselementen 40 an dem Grundträger 8 befestigt (vgl. FIG 1 bis FIG 4). Dazu werden die Abstandselemente 40 durch die Aussparungen 52 in dem Deckelement 50 hindurchgeführt. Der Sitzträger 14 wird dann unter Verwendung von Schrauben 68, welche wiederum durch die Abstandselemente 40 hindurchgeführt werden, mit dem Grundträger 8 verschraubt.

Der Abstand zwischen dem Grundträger 8 und dem Sitzträger 12 wird durch die Abstandselemente 40 vorgegeben. Der Abstand 42 zwischen dem Grundträger 8 und dem Sitzträger 14 kann beispielsweise 13 mm ± 5 mm, insbesondere 13 mm ± 2 mm, besonders bevorzugt genau 13 mm, betragen.

Zwischen dem Deckelement 50 und dem Sitzträger 14 ergibt sich der Spalt 46 mit einer Spaltbreite von maximal 6 mm. In diesen Spalt wird die Brandschutzdichtung 48 eingesetzt.

Auch zwischen der Sitzunterbauverkleidung 12 und der an den Seitenelementen 20 angerachten Wandverkleidung 53 ergibt sich ein Spalt 46. In diesen Spalt wird ebenfalls eine Brandschutzdichtung 48 eingesetzt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, solange diese nach dem Gegenstand der Ansprüche ausgeführt sind.

## Patentansprüche

1. Fahrzeug (1) mit einem Innenraum (4) und einer im Innenraum (4) angeordneten Baugruppe (2), wobei die Baugruppe (2)
- einen an einer ersten Stelle (6) im Innenraum (4) befestigten Grundträger (8),
- eine an einer zweiten Stelle (10) im Innenraum (4) befestigte Sitzunterbauverkleidung (12) und
- einen an dem Grundträger (8) befestigten Sitzträger (14) umfasst,
wobei die Sitzunterbauverkleidung (12) unabhängig von der Befestigung des Grundträgers (8) befestigt ist und der Grundträger (8) ausschließlich an einem die erste Stelle (6) bildenden, tragenden Grundgerüst (18) des Fahrzeugs (1) befestigt ist, **dadurch gekennzeichnet, dass** die Sitzunterbauverkleidung (12) ausschließlich an einem die zweite Stelle (10) bildenden Fußboden (26) des Fahrzeugs (1) befestigt ist, wobei der Fußboden (26) von dem Grundgerüst (18) des Fahrzeugs (1) entkoppelt ist und weder zwischen dem Grundträger (8) und der Sitzunterbauverkleidung (12) noch zwischen dem Sitzträger (14) und der Sitzunterbauverkleidung (12) eine unmittelbare kraftschlüssige Verbindung besteht, wobei zwischen dem tragenden Grundgerüst (18) des Fahrzeugs (1), an welchem der Grundträger (8) befestigt ist, und dem Fußboden (26) des Fahrzeugs (1), an welchem die Sitzunterbauverkleidung (12) befestigt ist, keine unmittelbare kraftschlüssige Verbindung besteht, und der Fußboden (26) des Fahrzeugs (1) unter Verwendung von Entkopplungselementen (16) von dem tragenden Grundgerüst (18) des Fahrzeugs (1) mechanisch entkoppelt ist.

2. Fahrzeug (1) nach einem der vorhergehenden Ansprüche, **dadurch gekennzeichnet, dass** der Grundträger (8) mehrere Streben (28) umfasst, welche zu einem rechteckigen Rahmen (30) zusammengefügt sind.

3. Fahrzeug (1) nach einem der Ansprüche 1 oder 2, **dadurch gekennzeichnet, dass** das Grundgerüst (18) des Fahrzeugs (1) mehrere Seitenelemente (20) aufweist, welche eine Seitenwand (22) bilden, und der Grundträger (8), insbesondere ausschließlich, an einem oder mehreren der Seitenelemente (20) befestigt ist.

4. Fahrzeug (1) nach einem der vorhergehenden Ansprüche, **dadurch gekennzeichnet, dass** die Sitzunterbauverkleidung (12) den Grundträger (8) zumindest seitlich umschließt.

5. Fahrzeug (1) nach einem der vorhergehenden Ansprüche, **dadurch gekennzeichnet, dass** die Sitzunterbauverkleidung (12) eine Oberkante (44) aufweist und zwischen der Oberkante (44) der Sitzunterbauverkleidung (12) und dem Sitzträger (14) ein Spalt (46) mit einer Spaltbreite von maximal 6 mm angeordnet ist.

6. Fahrzeug (1) nach einem der vorhergehenden Ansprüche, **dadurch gekennzeichnet, dass** der Sitzträger (14) unter Verwendung von Abstandselementen (40) an dem Grundträger (8) derart befestigt ist, dass zwischen dem Grundträger (8) und dem Sitzträger (14) ein Abstand (42) besteht.

7. Fahrzeug (1) nach Anspruch 6, **dadurch gekennzeichnet, dass** die Sitzunterbauverkleidung (12) ein Deckelement (50) aufweist, welches den Grundträger (8) zumindest teilweise bedeckt, wobei zumindest ein Teil des Deckelements (50) der Sitzunterbauverkleidung (12) innerhalb des Abstands (42) zwischen dem Grundträger (8) und dem Sitzträger (14) angeordnet ist.

8. Fahrzeug (1) nach Anspruch 7, **dadurch gekennzeichnet, dass** zwischen dem Deckelement (50) und dem Sitzträger (14) ein Spalt (46) mit einer Spaltbreite von maximal 6 mm angeordnet ist.

9. Fahrzeug (1) nach Anspruch 5 oder 8, **dadurch gekennzeichnet, dass** in dem Spalt (46) eine Brandschutzdichtung (48) eingesetzt ist.

10. Verfahren zur Montage einer Baugruppe (2) in einem Innenraum (4) eines Fahrzeugs (1), welche Baugruppe (2) einen Grundträger (8), einen Sitzträger (14) und eine Sitzunterbauverkleidung (12) umfasst, bei dem
- der Grundträger (8) an einer ersten Stelle (6) im Innenraum (4) befestigt wird,
- die Sitzunterbauverkleidung (12) an einer zweiten Stelle (10) im Innenraum (4) unabhängig von der Befestigung des Grundträgers (8) befestigt wird und
- der Sitzträger (14) an dem Grundträger (8) befestigt wird,
der Grundträger (8) ausschließlich an einem die erste Stelle (6) bildenden, tragenden Grundgerüst (18) des Fahrzeugs (1) befestigt wird, **dadurch gekennzeichnet, dass** die Sitzunterbauverkleidung (12) ausschließlich an einem die zweite Stelle (10) bildenden Fußboden (26) des Fahrzeugs (1) befestigt wird, wobei der Fußboden (26) von dem Grundgerüst (18) des Fahrzeugs (1) entkoppelt wird und wobei weder zwischen dem Grundträger (8) und der Sitzunterbauverkleidung (12) noch zwischen dem Sitzträger (14) und der Sitzunterbauverkleidung (12) eine unmittelbare kraftschlüssige Verbindung hergestellt wird, wobei zwischen dem tragenden Grundgerüst (18) des Fahrzeugs (1), an welchem der Grundträger (8) befestigt wird, und dem Fußboden (26) des Fahrzeugs (1), an welchem die Sitzunterbauverkleidung (12) befestigt wird, keine unmittelbare kraftschlüssige Verbindung hergestellt wird, und der Fußboden (26) des Fahrzeugs (1) unter Verwendung von Entkopplungselementen (16) von dem tragenden Grundgerüst (18) des Fahrzeugs (1) mechanisch entkoppelt wird.

11. Verfahren nach Anspruch 10, wobei der Grundträger (8) in der Höhe verstellbar ist und die Sitzunterbauverkleidung (12) ein Deckelement (50) aufweist, welches den Grundträger (8) zumindest teilweise bedeckt, bei dem die Höhe des Grundträgers (8) derart eingestellt wird, dass der Grundträger (8) mit einer vorgegebenen Höhendifferenz unterhalb des Deckelements (50) der Sitzunterbauverkleidung (12) angeordnet wird.

## Claims

1. Vehicle (1) having an interior (4) and a module (2) arranged in the interior (4), wherein the module (2) comprises:
- a main carrier (8), which is fastened in the interior (4) at a first location (6),
- a seat-substructure cladding (12), which is fastened in the interior (4) at a second location (10), and
- a seat carrier (14) which is fastened on the main carrier (8),
wherein the seat-substructure cladding (12) is fastened independently of the fastening of the main carrier (8), and the main carrier (8) is fastened exclusively on a load-bearing, main framework (18) of the vehicle (1), the main framework of the vehicle forming the first location (6),
**characterized in that** the seat-substructure cladding (12) is fastened exclusively on a floor (26) of the vehicle (1), the floor forming the second location (10), wherein the floor (26) has been uncoupled from the main framework (18) of the vehicle (1) and there is no direct force-fitting connection either between the main carrier (8) and the seat-substructure cladding (12) or between the seat carrier (14) and the seat-substructure cladding (12), wherein there is no direct force-fitting connection between the load-bearing, main framework (18) of the vehicle (1), on which the main carrier (8) is fastened, and the floor (26) of the vehicle (1), on which the seat-substructure cladding (12) is fastened, and the floor (26) of the vehicle (1) has been mechanically uncoupled from the load-bearing, main framework (18) of the vehicle (1) using decoupling elements (16) .

2. Vehicle (1) according to Claim 1,
**characterized in that** the main carrier (8) comprises a plurality of struts (28) which have been joined together to form a rectangular frame (30).

3. Vehicle (1) according to either of Claims 1 and 2, **characterized in that** the main framework (18) of the vehicle (1) has a plurality of side elements (20), which form a side wall (22), and the main carrier (8) is fastened, in particular exclusively, on one or more of the side elements (20).

4. Vehicle (1) according to one of the preceding claims, **characterized in that** the seat-substructure cladding (12) encloses the main carrier (8) at least laterally.

5. Vehicle (1) according to one of the preceding claims, **characterized in that** the seat-substructure cladding (12) has an upper edge (44), and a gap (46) with a gap width of at most 6 mm is arranged between the upper edge (44) of the seat-substructure cladding (12) and the seat carrier (14).

6. Vehicle (1) according to one of the preceding claims, **characterized in that** the seat carrier (14) is fastened on the main carrier (8) using spacer elements (40) such that there is a spacing (42) between the main carrier (8) and the seat carrier (14) .

7. Vehicle (1) according to Claim 6,
**characterized in that** the seat-substructure cladding (12) has a cover element (50), which at least partially covers the main carrier (8), wherein at least part of the cover element (50) of the seat-substructure cladding (12) is arranged within the spacing (42) between the main carrier (8) and the seat carrier (14) .

8. Vehicle (1) according to Claim 7,
**characterized in that** a gap (46) with a gap width of at most 6 mm is arranged between the cover element (50) and the seat carrier (14).

9. Vehicle (1) according to Claim 5 or 8,
**characterized in that** a fire-protection seal (48) has been inserted in the gap (46).

10. Method for installing a module (2) in an interior (4) of a vehicle (1), which module (2) comprises a main carrier (8), a seat carrier (14) and a seat-substructure cladding (12),
in the case of which
- the main carrier (8) is fastened in the interior (4) at a first location (6),
- the seat-substructure cladding (12) is fastened in the interior (4) at a second location (10), independently of the fastening of the main carrier (8), and
- the seat carrier (14) is fastened on the main carrier (8), and the main carrier (8) is fastened exclusively on a load-bearing, main framework (18) of the vehicle (1), the main framework of the vehicle forming the first location (6), **characterized in that** the seat-substructure cladding (12) is fastened exclusively on a floor (26) of the vehicle (1), the floor forming the second location (10), wherein the floor (26) has been uncoupled from the main framework (18) of the vehicle (1) and wherein no direct force-fitting connection is established either between the main carrier (8) and the seat-substructure cladding (12) or between the seat carrier (14) and the seat-substructure cladding (12), wherein no direct force-fitting connection between the load-bearing, main framework (18) of the vehicle (1), on which the main carrier (8) is fastened, and the floor (26) of the vehicle (1), on which the seat-substructure cladding (12) is fastened, and the floor (26) of the vehicle (1) is mechanically uncoupled from the load-bearing, main framework (18) of the vehicle (1) using decoupling elements (16) .

11. Method according to Claim 10,
wherein the main carrier (8) is height-adjustable and the seat-substructure cladding (12) has a cover element (50), which at least partially covers the main carrier (8),
in the case of which the height of the main carrier (8) is set such that the main carrier (8) is arranged at a predetermined difference in height beneath the cover element (50) of the seat-substructure cladding (12).

## Revendications

1. Véhicule (1) ayant un espace (4) intérieur et un module (2) disposé dans l'espace (4) intérieur, dans lequel le module (2) comprend
- un support (8) de base fixé en un premier endroit (6) dans l'espace (4) intérieur,
- un habillage (12) d'infrastructure de siège fixé en un deuxième endroit (10) dans l'espace (4) intérieur et
- un support (14) de siège fixé au support (8) de base,
dans lequel l'habillage (12) d'infrastructure de siège est fixé indépendamment de la fixation du support (8) de base et le support (8) de base est fixé exclusivement à une ossature (18) porteuse de base du véhicule (1) formant le premier endroit (6), **caractérisé en ce que** l'habillage (12) de l'infrastructure du siège est fixé exclusivement à un plancher (26) du véhicule (1) formant le deuxième endroit (10), dans lequel le plancher (26) est découplé de l'ossature (18) de base du véhicule (1), et il n'y a une liaison à coopération de force directe ni entre le support (8) de base et l'habillage (12) de l'infrastructure du siège ni entre le support (14) du siège et l'habillage (12) de l'infrastructure du siège, dans lequel il n'y a pas de liaison à coopération de force directe entre l'ossature (18) porteuse de base du véhicule (1) à laquelle le support (8) de base est fixé, et le plancher (26) du véhicule (1), auquel l'habillage (12) de l'infrastructure inférieure du siège est fixé et le plancher (26) du véhicule (1) est, en utilisant des éléments (16) de découplage, découplé mécaniquement de l'ossature (18) porteuse de base du véhicule.

2. Véhicule (1) suivant l'une des revendications précédentes, **caractérisé en ce que**
le support (8) de base comprend plusieurs entretoises (28), qui sont assemblées en un cadre (30) rectangulaire.

3. Véhicule (1) suivant l'une des revendications 1 ou 2, **caractérisé en ce que**
l'ossature (18) de base du véhicule (1) a plusieurs éléments (20) latéraux, qui forment une paroi (22) latérale et le support (8) de base est fixé, notamment exclusivement à l'un ou à plusieurs des éléments (20) latéraux.

4. Véhicule (1) suivant l'une des revendications précédentes, **caractérisé en ce que**
l'habillage (12) de l'infrastructure du siège entoure au moins latéralement le support (8) de base.

5. Véhicule (1) suivant l'une des revendications précédentes, **caractérisé en ce que**
l'habillage (12) de l'infrastructure du siège a un bord (44) supérieur et une fente (46) d'une largeur de 6 mm au maximum est disposée entre le bord (44) supérieur de l'habillage (12) de l'infrastructure du siège et le support (14) du siège.

6. Véhicule (1) suivant l'une des revendications précédentes, **caractérisé en ce que**
le support (14) du siège est, en utilisant des éléments (40) d'entretoisement, fixé au support (8) de base, une distance (42) étant constituée entre le support (8) de base et le support (14) du siège.

7. Véhicule (1) suivant la revendication 6,
**caractérisé en ce**
**que** l'habillage (12) de l'infrastructure du siège a un élément (50) de recouvrement, qui recouvre au moins en partie le support (8) de base,
dans lequel au moins une partie de l'élément (50) de recouvrement de l'habillage (12) de l'infrastructure du siège est disposée à l'intérieur de la distance (42) entre le support (8) de base et le support (14) du siège.

8. Véhicule (1) suivant la revendication 7,
**caractérisé en ce qu'**
une fente (46) d'une largeur de 6 mm au maximum est disposée entre l'élément (50) de recouvrement et le support (14) du siège.

9. Véhicule (1) suivant la revendication 5 ou 8,
**caractérisé en ce qu'**
une étanchéité (48) à l'épreuve de l'incendie est insérée dans la fente (46).

10. Procédé de montage d'un module (2) dans un espace (4) intérieur d'un véhicule (1), lequel module (2) comprend un support (8) de base, un support (14) de siège et un habillage (12) de la structure inférieure du siège,
dans lequel
- on fixe le support (8) de base à un premier endroit (6) dans l'espace (4) intérieur,
- on fixe l'habillage (12) de l'infrastructure du siège à un deuxième endroit (10) dans l'espace (4) intérieur, indépendamment de la fixation du support (8) de base et
- on fixe le support (14) du siège au support (8) de base, on fixe le support (8) de base exclusivement à une ossature (18) porteuse de base du véhicule (1) formant le premier endroit (6), **caractérisé en ce que** l'on fixe l'habillage (12) de la structure inférieure du siège exclusivement à un plancher (26) du véhicule (1) formant le deuxième endroit (10), dans lequel on découple le plancher (26) de l'ossature (18) de base du véhicule (1) et dans lequel on ne ménage une liaison à coopération de force directe, ni entre le support (8) de base et l'habillage (12) de l'infrastructure inférieure du siège, ni entre le support (14) du siège et l'habillage (12) de l'infrastructure inférieure du siège, dans lequel on ne ménage pas de liaison à coopération de force directe entre l'ossature (18) de base porteuse du véhicule (1), à laquelle est fixé le support (8) de base et le plancher (26) du véhicule (1), auquel l'habillage (12) de l'infrastructure inférieure du siège est fixé, et on découple mécaniquement le plancher (26) du véhicule (1) de l'ossature (18) porteuse de base du véhicule (1) en utilisant des éléments (16) de découplage.

11. Procédé suivant la revendication 10, dans lequel le support (8) de base est réglable en hauteur et l'habillage (12) de l'infrastructure du siège à un élément (50) de recouvrement, qui recouvre au moins en partie le support (8) de base,
dans lequel on règle le niveau du support (8) de base de manière à mettre le support (8) de base à une différence de niveaux donnée à l'avance en-dessous de l'élément (50) de recouvrement de l'habillage (12) de l'infrastructure du siège.
